# EUROPEAN PATENT SPECIFICATION

(11) **EP 1 640 144 B1**
(45) Date of publication and mention of the grant of the patent: **26.11.2008**
(21) Application number: 04425712.9
(22) Date of filing: 24.09.2004
(51) Int. Cl.: B29D 31/508, A43B 9/18, A43B 13/12, A43D 119/00

(54) **A method and an apparatus for soling a safety shoe**
Verfahren und Vorrichtung zur Herstellung einer Sohle eines Sicherheitsschuhes
Procédé et dispositif de fabrication d'une semelle de chaussure de sécurité

(43) Date of publication of application: 29.03.2006
(73) Proprietor: Calzaturificio Orion S.p.A., 35023 Bagnoli Di Sopra (PD) (IT)
(72) Inventor: Meneghin, Maria Antonietta, 35021 Terassa Padovana (Padova) (IT)
(74) Representative: Petruzziello, Aldo

(56) References cited:
- EP-A- 0 852 998
- DE-A1- 2 823 099
- DE-C1- 4 020 358
- GB-A- 1 316 374
- US-A1- 2003 110 582

## Description

The present invention refers to a system for soling safety shoe and in particular to a method and to an apparatus which provide a control during the soling process of safety- type shoe.

Current legislation in the field of industrial safety makes the use of safety shoe mandatory for persons working in work environments with a risk of accidents, such as building sites, engineering workshops, and the like.

A safety shoe must have a puncture-resistant sole designed not to be punctured by nails, metal inserts and the like which can generally be found in building sites. For this purpose the puncture-resistant sole is obtained by means of a thin metal plate, generally of steel, which is inserted in the upper of the shoe and embedded in the plastic material forming the insole and the sole of the shoe.

GB-A 1 316 374 discloses a safety shoe comprising a puncture-resistant plate and a puncture-resistant cap inserted in seats formed in the bottom and in the tip of the upper of the shoe and a sole moulded beneath the upper so as to incorporate therein the puncture-resistant plate and cap.

Said puncture-resistant thin steel plate is inserted manually in the upper of the shoe by an operator or automatically by means of a special feeder, during the manufacturing process of the shoe. Subsequently, the shoe is directed by an automated machine to an injecting moulding stage in which the upper is disposed inside a mould into which a plastic material for formation of the insole and of the sole of the shoe is injected. The plastic material surrounds the thin metal plate, which is no longer visible.

During said manufacturing process, it can happen that the operator forgets to insert a puncture-resistant thin metal plate into the upper or that the automatic feeder fails to insert a puncture-resistant thin metal plate into the upper. As a result, an upper without a puncture-resistant plate will be sent to the moulding stage for moulding of the insole and of the sole so as to obtain a finished shoe.

The finished shoes generally undergo a checking process made by means of a metal detector, which is passed manually over each shoe by an operator. If said metal detector does not detect the presence of the metal plate in a shoe, that shoe is discarded, with the result of a considerable loss of money.

However, it must be considered that even said final checking system has a margin of error and it can happen that the operator with the metal detector fails to detect that the puncture-resistant plate is lacking. As a result, a shoe that is not suitable to meet the safety requirements is put onto the market. Such fact is more weight than a production waste.

Object of the present invention is to overcome the drawbacks of the prior art by providing a method and an apparatus for soling safety shoes that are extremely reliable and able to eliminate production waste and to prevent unsuitable safety shoes from being put onto the market.

This object is achieved in accordance with the invention with the method and the apparatus whose characteristics are listed in independent claims 1 and 4, respectively.

Advantageous embodiments of the invention are apparent from the dependent claims.

The method for soling safety shoes according to the invention comprises the following steps:
- to insert an puncture-resistant plate into a seat formed in the bottom part of the upper of the shoe, and
- to mould the sole beneath the upper so as to incorporate within it said puncture-resistant plate.
The main characteristic is represented by the fact that the presence of the puncture-resistant plate in the seat in the bottom part of the upper is detected before moulding the sole.

In this manner the soling cycle is stopped so that the operator can insert the missing plate in the seat in the upper. Then, the soling cycle starts again, with the certainty that the moulding of the sole takes place only on uppers provided with a puncture-resistant plate.

In this manner waste is prevented and the possibility of putting on the market shoes without a puncture-resistant plate is avoided.

Further characteristics of the invention will be made clearer by the detailed description that follows, referring to a purely exemplifying and therefore non-limiting embodiment thereof, illustrated in the appended drawings, in which:
Figure 1 is a block diagram illustrating diagrammatically a soling machine according to the invention;
Figure 2 is a diagrammatic perspective, broken-off view, illustrating an upper inserting station of the soling machine of Figure 1;
Figure 3 is a diagrammatic perspective, broken-away view, illustrating a puncture-resistant plate inserting station of the soling machine of Figure 1;
Figure 4 is a diagrammatic perspective, broken-away view, illustrating a checking station of the soling machine of Figure 1;
Figure 5 is a diagrammatic perspective, broken-away view, illustrating a moulding station of the soling machine of Figure 1; and
Figure 6 a block diagram illustrating the control of the soling machine of Figure 1.

The soling system for safety shoes according to the invention is described with the aid of the figures.

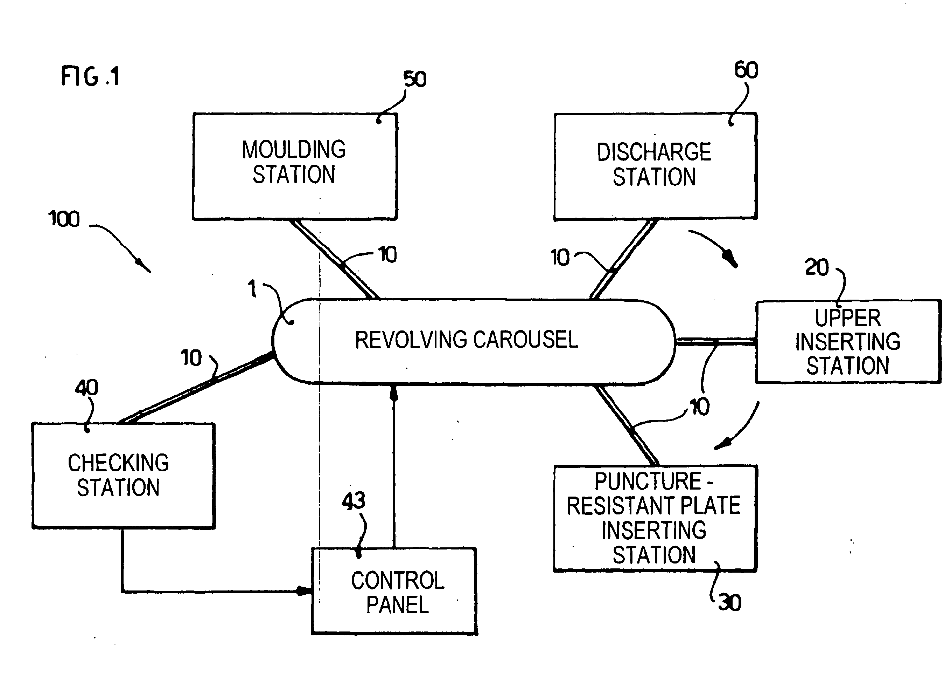

With reference to Figure 1, a soling machine indicated as a whole with the reference numeral 100 is illustrated. The soling machine 100 comprises a revolving carousel 1 in the form of a substantially circular frame, mounted rotatably and driven in rotation with an indexed movement by motor system.

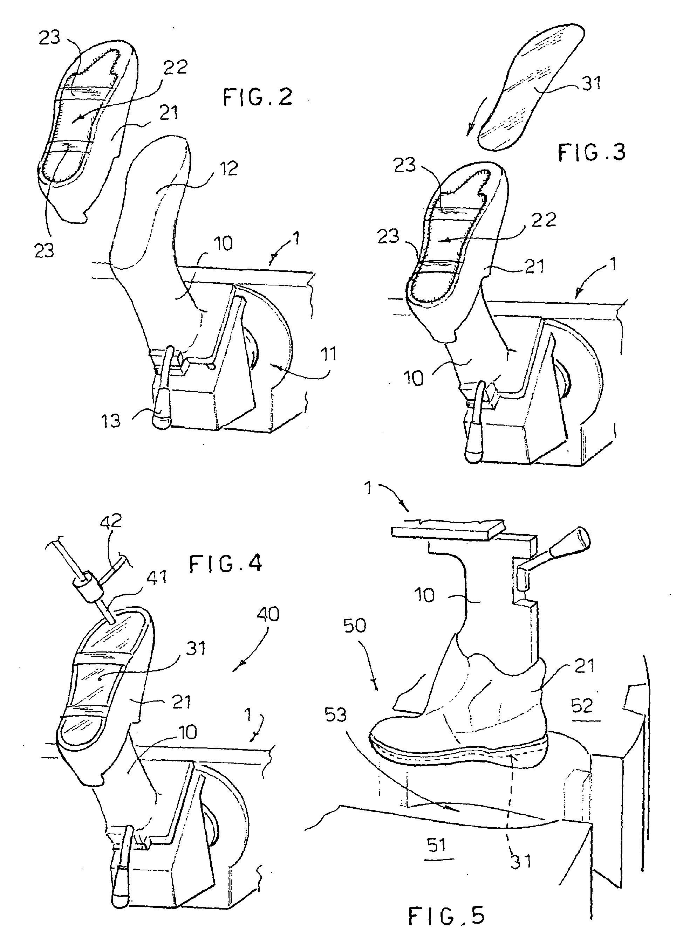

A plurality of arms 10 is mounted on the revolving carousel 1 and protrudes radially therefrom. As shown in Figure 2, each arm 10 is constrained to the frame of the revolving carousel 1 by means of an articulated joint 11, so as to be able to be oriented in the desired direction by means of a lever with a grip 13. A last 12 essentially reproducing the shape of the shoe to be produced is mounted at the free end of the arm 10.

Returning to Figure 1, at the start of the soling cycle, an arm 10 with the relative last 12 is situated level with an upper inserting station 20. As shown in Figure 2, in the upper inserting station 20 an upper 21 is fitted manually or automatically on the last 12 so that the lower part of the upper, that is to say the part destined to receive the sole, substantially faces upwards and towards the outside of the machine.

The upper 21 defines a seat 22 at the bottom in which the insole and the sole of the shoe must be formed. Two elastic strips 23, which pass transversally across the seat 22 to accommodate the sole, are connected to the upper 21.

Returning to Figure 1, after the upper 21 has been fitted on the last 12, the revolving carousel 1 makes an indexed rotation so as to bring the arm 10 with the upper 21 disposed on the last 12 level with a station for insertion of the puncture-resistant plate 30.

As shown in Figure 3, in the puncture-resistant plate inserting station 30, a puncture-resistant plate 31 is inserted manually or automatically into the bottom seat 22 of the upper 21 so as to be retained by the elastic strips 23. The plate 31 is obtained from a steel plate by shearing or melting so as to have a profile substantially similar to that of the sole of the shoe that is to be obtained.

Returning to Figure 1, after the puncture-resistant plate 31 has been inserted beneath the upper 21 the revolving carousel 1 makes an indexed rotation so as to bring the arm 10 with the plate retained by the elastic strips 23 level with a checking station 40.

As shown in Figure 4, in the checking station 40 a sensor 41 detects the presence of the puncture-resistant plate 31. The sensor 41 can be an inductive sensor or a proximity switch, for example, which is brought into contact with the puncture-resistant plate 31. For this purpose the sensor 41 can be mounted on a mobile arm 42 synchronised with the indexed movement of the revolving carousel 1 or can be disposed in such a position that during the rotation of the revolving carousel the plate 31 strikes directly against the sensor 41.

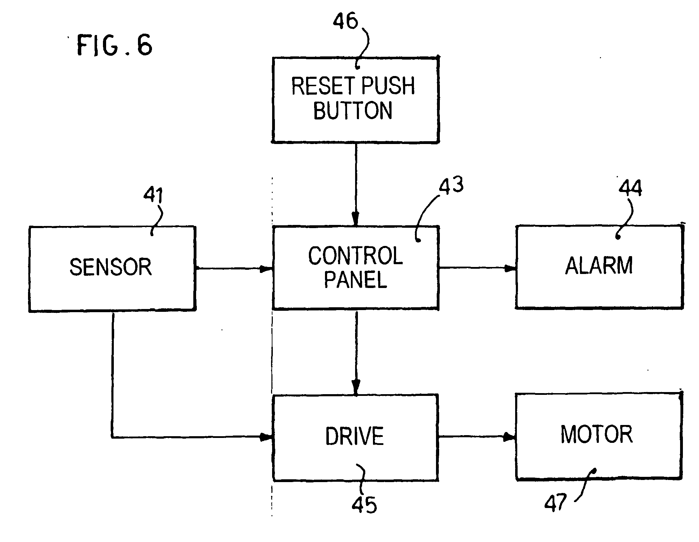

As shown in Figure 6, the sensor 41 is electrically connected to the control panel 43 of the soling machine 100 and to a drive 45, which controls the rotation of the motor 47 of the revolving carousel 1. Furthermore, the control panel 43 is connected electrically to an alarm 44 which can be an acoustic and/or an optical signal, for example a siren and/or a green/red signal light.

The inductive sensor 41 is a normally open switch, which is closed when it comes into contact with the thin metal plate 31. As a result, when the sensor 41 detects the presence of the puncture-resistant plate 31, it sends an enabling signal C1 to the actuator 45 which controls the motor 47 to cause an indexed rotation of the carousel 1. On the contrary, if the sensor 41 does not detect the presence of the puncture-resistant plate 31 the actuator 45 does not receive the enabling signal C1 and the motor 47 cannot cause a rotation of the carousel 1.

When the sensor 41 is in the condition to detect the presence of a puncture-resistant plate 31 and does not detect it, it sends an alarm signal C2 through the control panel 43 to the alarm 44, which is triggered. A siren and a lighting of a red light then warn the operator that the sensor 41 has not detected the puncture-resistant plate 31 and that therefore the machine 1 is blocked.

Furthermore, the control panel 43 is provided with a reset push button 46 which, when pressed, sends the control panel a reset signal R which restores the initial situation, that is to say, it switches off the alarm 44 and orders the restart of the carousel motor 47 through the actuator 45.

In the event of the puncture-resistant plate 31 not having been inserted in the upper 21 in the puncture-resistant plate inserting station 30, the sensor 41 does not detect the presence of the puncture-resistant plate 31 in the control station 40, and therefore the machine 100 is blocked and the alarm is switched on. In this manner the operator has all the time to insert the plate 31 in the upper 21 and subsequently to switch off the alarm and to restart the machine by pressing the reset button 46 situated on the control panel 43. Consequently the sensor 41 detects the new plate 31 and enables the actuator 45 for the rotation of the motor 47.

Returning to Figure 1, after the sensor 41 in the checking station 40 has given the consent signal, the revolving carousel 1 makes an indexed revolution so as to bring the arm 10 with the plate 31 retained by the elastic strips 23 level with a moulding station 50.

As shown in Figure 5, in the moulding station 50 the arm 10 is lowered so as to bring the bottom part of the upper 21 facing downward. Then, the bottom wall of the upper 21 in which the puncture-resistant plate 31 is situated is inserted in the mould cavity 53 defined by two mould halves 51 and 52. The mould halves (51, 52) are closed and a plastic or rubber material destined to form the sole and the insole of the safety shoe are injected. In this manner the puncture-resistant plate 31 is embedded and incorporated into the material injected into the mould.

Lastly, the finished shoe is extracted from the mould and then, as shown in Figure 1, the revolving carousel 1 makes an indexed revolution to bring the finished shoe level with a discharge station 60 in which the shoe is discharged from the soling machine 100 so as to free the last 12 on the arm 10 which is ready to be brought level with the upper-inserting station 20 to begin a new soling cycle.

It should be noted that provision of the checking station 40 prevents uppers 21 without puncture-resistant plates 31 from reaching the moulding station 50. In this manner moulding of the sole and of the insole is avoided in the event of the puncture-resistant plate not being present. Thus it is also possible to avoid the final check on the finished shoe with the metal detector. As a result, there are neither a production waste nor the risk of putting a shoe without a puncture-resistant plate onto the market.

## Claims

1. A method for soling a safety shoe comprising the following steps:
- to insert a puncture-resistant plate (31) into a seat (22) formed in the bottom part of the upper (21) of the shoe, and
- to mould the sole of the shoe beneath the upper so as to incorporate therein said puncture-resistant plate (31),
**characterised by** detecting the presence of said puncture-resistant plate (31) in said seat (22) in the bottom part of the upper before moulding the sole.

2. A method according to claim 1, **characterised in that** said detection step of the puncture-resistant plate enables to go to the subsequent step of moulding of the sole.

3. A method for checking safety shoes made according to claim 1 or 2, **characterised in that** an alarm is actuated to alert an operator if the presence of said puncture-resistant plate is not detected in the detection stage.

4. A soling apparatus (100) for safety shoes comprising:
- a puncture-resistant plate inserting station (30), in which a puncture-resistant plate (31) is inserted in a seat (22) formed in the bottom part of the upper (21) of the shoe, and
- a moulding station (50), in which the sole of the shoe is moulded beneath the upper so as to incorporate within it said puncture-resistant plate (31),
**characterised in that** it comprises (40)
- a checking station (40), disposed downstream of said puncture-resistant plate insertion station (30) and upstream of said moulding station (50), said checking station (40) comprising detection means (41) able to detect the presence of said puncture-resistant plate (31) in said seat (22) of the bottom part of the upper.

5. A soling apparatus (100) according to claim 4, **characterised in that** said detection means (41) comprise an inductive sensor or a proximity switch which detects the presence of said puncture-resistant plate (31) through direct contact therewith.

6. A soling apparatus (100) according to claim 4 or 5, **characterised in that** it comprises a revolving carousel (1) provided with a plurality of arms (10) designed to support the shoe uppers (21) during the soling process, said revolving carousel (1) being driven in rotation with an indexed movement by a motor (47) so as to move the uppers (21) supported by the arms (10) into the various stations (30, 40, 50) of the apparatus.

7. A soling apparatus (100) according to claim 6, **characterised in that** said detection means (41) are electrically connected to an actuator (45) of said motor (47) of the revolving carousel (1) to enable the indexed rotation of the motor only when the presence of said puncture-resistant plate (31) is detected.

8. A soling apparatus (100) according to any one of claims 4 to 7, **characterised in that** said detection means (41) are electrically connected to an alarm (44), which is switched on when the detection means (41) do not detect the presence of said puncture-resistant plate (31).

9. A soling apparatus (100) according to claims 7 and 8, **characterised in that** it comprises a reset push-button (46) mounted in the control panel (43) of the soling apparatus (100) which is pressed by the operator to switch off said alarm (44) and to restart the actuator (45) of said motor (47), after said detection means (41) have not detected the presence of the puncture-resistant plate (31).

10. A soling apparatus (100) according to claim 8 or 9, **characterised in that** said alarm (44) is of the acoustic and/or optical type, such as a siren and/or a red or green signal light.

## Patentansprüche

1. Verfahren zur Herstellung einer Sohle eines Sicherheitsschuhs, folgende Schritte umfassend:
- Einfügen einer durchstoßfesten Platte (31) in einen Sitz (22), der im unteren Teil des Obermaterials (21) des Schuhs ausgebildet ist, und
- derartiges Formen der Sohle des Schuhs unter dem Obermaterial, dass die durchstoßfeste Platte (31) darin eingegliedert ist,
**gekennzeichnet durch** das Erfassen des Vorhandenseins der durchstoßfesten Platte (31) in dem Sitz (22) in dem unteren Teil des Obermaterials vor dem Formen des Schuhs.

2. Verfahren nach Anspruch 1, **dadurch gekennzeichnet, dass** der Schritt des Erfassens der durchstoßfesten Platte dazu ermöglicht, den anschließenden Schritt des Formens des Schuhs auszuführen.

3. Verfahren zum Prüfen von Sicherheitsschuhen, die nach einem der Ansprüche 1 oder 2 hergestellt sind, **dadurch gekennzeichnet, dass** ein Alarm zum Warnen einer Bedienungsperson ausgelöst wird, wenn das Vorhandensein der durchstoßfesten Platte in der Erfassungsphase nicht erfasst wird.

4. Vorrichtung (100) zur Herstellung einer Sohle für Sicherheitsschuhe, umfassend:
- eine Einfügungsstation (30) für durchstoßfeste Platten, in der eine durchstoßfeste Platte (31) in einen Sitz (22) eingefügt wird, der im unteren Teil des Obermaterials (21) des Schuhs ausgebildet ist, und
- eine Formstation (50), in der die Sohle des Schuhs derart unter dem Obermaterial geformt wird, dass die durchstoßfeste Platte (31) darin eingegliedert ist,
**dadurch gekennzeichnet, dass** sie
- eine Prüfstation (40) umfasst, die der Einfügungsstation (30) für durchstoßfeste Platten nachgelagert und der Formstation (50) vorgelagert angeordnet ist, wobei die Prüfstation (40) Erfassungsmittel (41) umfasst, die fähig sind, das Vorhandenseins der durchstoßfesten Platte (31) in dem Sitz (22) in dem unteren Teil des Obermaterials zu erfassen.

5. Vorrichtung (100) zur Herstellung einer Sohle nach Anspruch 4, **dadurch gekennzeichnet, dass** die Erfassungsmittel (41) einen induktiven Sensor oder einen Näherungsschalter umfassen, der das Vorhandensein der durchstoßfesten Platte (31) durch direkten Kontakt damit erfasst.

6. Vorrichtung (100) zur Herstellung einer Sohle nach einem der Ansprüche 4 oder 5, **dadurch gekennzeichnet, dass** sie ein umlaufendes Karussell (1) umfasst, das mit mehreren Armen (10) versehen ist, die zum Stützen der Schuhobermaterialien (21) während des Sohlenherstellungsvorgangs ausgelegt sind, wobei das umlaufende Karussell (1) in Rotation mit einer indizierten Verschiebung durch einen Motor (47) zum Verschieben der Obermaterialien (21), die durch die Arme (10) gestützt sind, in die verschiedenen Stationen (30, 40, 50) der Vorrichtung angetrieben ist.

7. Vorrichtung (100) zur Herstellung einer Sohle nach Anspruch 6, **dadurch gekennzeichnet, dass** die Erfassungsmittel (41) elektrisch an ein Stellglied (45) des Motors (47) des umlaufenden Karussells (1) angeschlossen sind, um die indizierte Rotation des Motors nur dann zu ermöglichen, wenn das Vorhandensein der durchstoßfesten Platte (31) erfasst ist.

8. Vorrichtung (100) zur Herstellung einer Sohle nach einem der Ansprüche 4 bis 7, **dadurch gekennzeichnet, dass** die Erfassungsmittel (41) elektrisch an einen Alarm (44) angeschlossen sind, der eingeschaltet wird, wenn die Erfassungsmittel (41) das Vorhandensein der durchstoßfesten Platte (31) nicht erfassen.

9. Vorrichtung (100) zur Herstellung einer Sohle nach einem der Ansprüche 7 oder 8, **dadurch gekennzeichnet, dass** sie einen Rückstelldruckknopf (46) umfasst, der im Steuerpult (43) der Vorrichtung (100) zur Herstellung einer Sohle angebracht ist und von der Bedienungsperson zum Ausschalten des Alarms (44) und zum erneuten Anlaufenlassen des Stellglieds (45) des Motors (47) gedrückt wird, nachdem die Erfassungsmittel (41) das Vorhandensein der durchstoßfesten Platte (31) nicht erfasst haben.

10. Vorrichtung (100) zur Herstellung einer Sohle nach einem der Ansprüche 8 oder 9, **dadurch gekennzeichnet, dass** der Alarm (44) akustisch und/oder optisch ist, wie etwa eine Sirene und/oder eine rote oder grüne Signalleuchte.

## Revendications

1. Procédé de fabrication d'une semelle de chaussure de sécurité comprenant les étapes suivantes consistant à :
- insérer une plaque increvable (31) dans un siège (22) formé dans la partie inférieure de la tige (21) de la chaussure, et
- mouler la semelle de la chaussure en dessous de la tige de manière à incorporer dans celle-ci ladite plaque increvable (31),
**caractérisé par** la détection de la présence de ladite plaque increvable (31) dans ledit siège (22) dans la partie inférieure de la tige avant le moulage de la semelle.

2. Procédé selon la revendication 1, **caractérisé en ce que** ladite étape de détection de la plaque increvable permet de passer à l'étape suivante de moulage de la semelle.

3. Procédé de vérification de chaussures de sécurité fabriquées selon la revendication 1 ou 2, **caractérisé en ce que** une alarme est actionnée afin d'alerter un opérateur si la présence de ladite plaque increvable n'est pas détectée à l'étape de détection.

4. Appareil de fabrication de semelle (100) de chaussures de sécurité comprenant :
- un poste d'insertion de plaque increvable (30), dans lequel une plaque increvable (31) est insérée dans un siège (22) formé dans la partie inférieure de la tige (21) de la chaussure, et
- un poste de moulage (50), dans lequel la semelle de la chaussure est moulée en dessous de la tige de manière à incorporer dans celle-ci ladite plaque increvable (31),
**caractérisé en ce que** il comprend (40)
- un poste de vérification (40), disposé en aval dudit poste d'insertion de plaque increvable (30) et en amont dudit poste de moulage (50), ledit poste de vérification (40) comprenant des moyens de détection (41) aptes à détecter la présence de ladite plaque increvable (31) dans ledit siège (22) de la partie inférieure de la tige.

5. Appareil de fabrication de semelle (100) selon la revendication 4, **caractérisé en ce que** ledit moyen de détection (41) comprend un détecteur inductif ou un commutateur de proximité qui détecte la présence de ladite plaque increvable (31) par contact direct avec celle-ci.

6. Appareil de fabrication de semelle (100) selon la revendication 4 ou 5, **caractérisé en ce que** il comprend un carrousel rotatif (1) pourvu d'une pluralité de bras (10) conçus afin de supporter les tiges de chaussures (21) pendant le processus de fabrication de semelle, ledit carrousel rotatif(1) étant entraîne en rotation avec un mouvement induit par un moteur (47) de manière à déplacer les tiges (21) supportées par les bras (10) dans les divers postes (30,40,50) de l'appareil.

7. Appareil de fabrication de semelle (100) selon la revendication 6, **caractérisé en ce que** lesdits moyens de détection (41) sont connectés électriquement à un actionneur (45à) dudit moteur (47) du carrousel rotatif (1) afin de permettre la rotation induite du moteur uniquement quand la présence de ladite plaque increvable (31) est détectée.

8. Appareil de fabrication de semelle (100) selon une quelconque des revendications 4 à 7, **caractérisé en ce que** lesdits moyens de détection (41) sont connectés électriquement à une alarme (44), qui est mise en marche lorsque les moyens de détection (41) ne détectent pas la présence de ladite plaque increvable (31).

9. Appareil de fabrication de semelle (100) selon les revendications 7 et 8, **caractérisé en ce que** il comprend un bouton poussoir de réarmement (46) monté dans le tableau de commande (43) de l'appareil de fabrication de semelle (100) qui est pressé par l'opérateur afin de mettre hors tension ladite alarme (44) et de redémarrer l'actionneur (45) dudit moteur (47), après que lesdits moyens de détection (41) n'ont pas détecté la présence de la plaque increvable (31).

10. Appareil de fabrication de semelle (100) selon la revendication 8 ou 9, **caractérisé en ce que** ladite alarme (44) est du type acoustique et/ou optique, comme une sirène et/ou un signal lumineux rouge ou vert.
